# EUROPEAN PATENT SPECIFICATION

(11) **EP 1 976 897 B1**
(45) Date of publication and mention of the grant of the patent: **17.03.2010**
(21) Application number: 07702955.1
(22) Date of filing: 23.01.2007
(51) Int. Cl.: C08G 12/26, C08L 61/28, D21H 17/49, D21H 17/51, C08F 20/24

(54) **AMINOPLAST RESIN FOR DECORATIVE APPLICATIONS**
AMINOPLAST FÜR DEKORATIVE ANWENDUNGEN
RÉSINE AMINOPLASTE POUR DES APPLICATIONS DÉCORATIVES

(30) Priority: 27.01.2006 EP 06075203
(43) Date of publication of application: 08.10.2008
(73) Proprietor: DSM IP Assets B.V., 6411 TE Heerlen (NL); E.I. DU PONT DE NEMOURS AND COMPANY, Wilmington, DE 19898 (US)
(72) Inventor: EVERS, Lars, NL-6132 CW Sittard (NL); BONEKAMP, Karel, Franciscus, Hubertus, NL-6181 BE Elsloo (NL); PEETERS, Hermann Phillip, 53721 Siegburg (DE); PABON, Martin, Jean-Jacques, F-78980 Neauphlette (FR)
(74) Representative: Scheltus, Irma
(86) International application number: PCT/EP2007/000545
(87) International publication number: WO 2007/085416

(56) References cited:
- WO-A-02/08518
- WO-A-94/26832

## Description

The present invention relates to an aminoplast resin, suitable for decorative applications and comprising a fluoro compound. Such a resin is disclosed in WO 02/08518, where polytetrafluoroethylene (PTFE) is added to a curable aminoplast resin like melamine - formaldehyde (MF) resin (wherein M stands for melamine and F stands for formaldehyde). The PTFE is present in an amount between 0.1 and 10 wt.% of the resin; the resin is used to impregnate a paper; the impregnated paper is then used in the manufacturing of a laminate. The laminate has, due to the presence of PTFE, increased dirt repellency and water repellency.

A disadvantage of the known resin is that relatively high amounts of the fluoro compound need to be added to the resin in order to achieve a certain dirt repellency and water repellency. According to WO 02/08518, the best results are achieved if at least 1-3 wt.% of PTFE are added to the resin.

It is an objective of the present invention to reduce the said disadvantage.

The said objective of the present invention is achieved in that the aminoplast resin comprises between 0.005 and 5 wt.% of a polyfluorinated (alk-)acrylic polymer (PFAP).

Here and herinafter the term "polyfluorinated (alk-)acrylic polymer (PFAP)" means a homopolymer or copolymer based upon a polyfluorinated monomer of the following structure:

R_{f}-B-O-C(O)-C(R)=CH-R (I)

in which:
- R_{f}: represents a linear or branched chain polyfluorinated radical containing 2 to 20 carbon atoms, preferably 4 to 16 carbon atoms,
- B: represents a bivalent group bonded to O via a carbon atom which may comprise one or more atoms of oxygen, sulphur and/or nitrogen,
- R: one of the symbols R represents a hydrogen atom, and the other a hydrogen atom or an alkyl radical containing 1 to 4 carbon atoms.
In the above formula R_{f} has the following formula:

R_{f} = CₙHₓF₍₂ₙ₊₁₋ₓ₎

in which:
n = 2-20
0 ≤ x ≤ n.
In a preference, x has the value of 0.

Preferably, the PFAP is selected from the group comprising perfluoroalkyl acrylic (co)polymers, perfluoroalkyl methacrylic (co)polymers, and combinations thereof. Preferably, such a fluoro compound is a copolymer derived from perfluoroalkyl acrylic or perfluoroalkyl methacrylic monomers or combinations thereof, and amino functional monomers. More preferably, the fluoro compound is a copolymer derived from perfluoroalkyl acrylic or perfluoroalkyl methacrylic monomers or combinations thereof, amino functional monomers, and silane functional monomers. In addition to the perfluoroalkyl acrylic, perfluoroalkyl methacrylic, amino functional monomers, and silane monomers, optionally, the copolymer may be derived from vinylic monomers. Such fluoro compounds are commercially available, for example those sold under the trade name "ZONYL" by E. I. du Pont de Nemours and Company, Wilmington, DE, USA. The reader is also referred to US-2004/0077758A1.

An advantage of the aminoplast resin according to the present invention is that, compared to an aminoplast resin as such, or to a resin comprising PTFE, a significantly improved water-, oil- and dirt repellency is achieved, whereby a lower amount of fluoro compound than in the known PTFE-containing resin can be added for achieving the same or even higher repellence effect. A further advantage of the aminoplast resin according to the present invention is that the fluoro compound comprised therein can show an improved homogeneity in the resin compared to a PTFE-containing resin. Yet a further advantage of the aminoplast resin according to the present invention is that the fluoro compound comprised therein can form a chemical bond with the aminoplast resin, in particular during the curing of the resin, and/or act as compatibilising agent. This results in an at least partial fixation of the fluoro compound, said fixation then partly or even wholly prevents the fluoro compound from accumulating in a - often non-permanent - surface layer. As a consequence, the dirt repellency and water repellency of end products made with the aminoplast resin according to the present invention can have a more durable character, which is of value in many common applications such as laminate flooring.

The present invention relates to an aminoplast resin, suitable for decorative applications. These resins, their preparation and their use for decorative applications such as laminates are known per se and described in for example Kunststoff Handbuch, Vol. 10 Duroplaste (Becker, Braun; Carl Hanser Verlag 1988), where in Chapter 1.2.3 the preparation of melamine resins is described, and where in Chapter 4.4 the preparation of decorative laminates and laminated wood-based panels is described. The aminoplast resin according to the present invention is preferably an MF resin or a melamine-urea-formaldehyde (MUF) resin. Preferably, the MF resin has a molar F/M ratio (formaldehyde to melamine) between 1 and 3, more preferably between 1.1 and 2.5, in particular between 1.2 and 2.1.

The resin according to the present invention comprises a polyfluorinated (alk-) acrylic polymer. Preferably, such a polymer is selected from the group consisting of perfluoroalkyl acrylic (co)polymers, perfluoroalkyl methacrylic (co)polymers, and combinations thereof. Selected examples of useful fluoro compounds include, but are not limited to, Zonyl^{®} 8740, Zonyl^{®} 321, Zonyl^{®} 329, Zonyl^{®} 9373. Particularly suitable are Zonyl^{®} 321, Zonyl^{®} 329, and Zonyl^{®} 8740.

The fluoro compound may be added to the aminoplast resin during any stage of the resin preparation; it may also, and preferably, be added to a resin that has already been prepared. According to the present invention, the aminoplast resin comprises between 0.005 and 5 wt.% of the fluoro compound. An amount of at least 0.005 wt.% is desired in order to ensure that a significant oil-, water- and stain repellency is achieved; preferably, at least 0.01, 0.03, 0.06, 0.10, 0.15 or 0.20 wt.% is added. From an economical point of view it is preferred that at most 4.5 wt.%, more preferably at most 4.0, 3.7, 3.3, 3.0, or 2.75 wt.% is added. If, as is common with fluoro compounds, the fluoro compound is available as an aqueous solution or emulsion, then an amount of the solution or emulsion should be added in such a way that the amount of actual fluoro compound falls within the limits as given.

Since the aminoplast resin according to the present invention is suitable for decorative purposes, the present invention also relates to a laminate comprising a top layer and a bottom layer, whereby said top layer comprises an at least partially cured aminoplast resin, wherein the top layer comprises between 0.005 and 5 wt.% of a fluoro compound as defined above.

Laminates having a top layer and a bottom layer, whereby said top layer comprises an at least partially, preferably essentially fully cured aminoplast resin are known as such, and are described in for example Chapter 4.4 of vol. 10 of the Kunststoff Handbuch as referred to above. The top layer in the laminates as described in the said handbook is generally formed from impregnated paper; however, the laminates according to the present invention are not limited to those having top layers formed in this fashion.

It is customary to add various types of compounds to an aminoplast resin when preparing a laminate. Known examples of such types of compounds are catalysts for the curing process (such as acids), and release agents and/or wetting agents. It was found, surprisingly, that the amount of catalyst to be added to the resin can be reduced when an aminoplast resin according to the present invention is used compared to aminoplast resins not comprising a fluoro compound as defined above, or comprising PTFE, while still achieving the same speed of curing. It was found that the said reduction can, depending on the concentration of the fluoro compound in the resin and with no loss in speed of curing as evidenced in the turbidity test, lie between 10% and 80%.

The amount of fluoro compound in the top layer lies between 0.005 and 5 wt.%; preferably, the amount lies between 0.005 or 0.01 and 4.5, or between 0.03 and 4.0, or between 0.06 and 3.7, or between 0.10 and 3.3, or between 0.15 and 3.0, or between 0.20 and 2.75 wt.%. Due to the specific nature of the fluoro compounds used in the present invention, it may occur that during, or subsequent to the preparation of the laminate, some migration takes place, such as for example a migration to the very surface of the laminate. This may lead to a situation where the distribution of the fluoro compound over the top layer is not entirely homogeneous, although it has been observed that the distribution of the fluoro compound in a resin according to the present invention seems to be more homogeneous than with known fluoro compound-containing resins. An additional advantage of the present invention is that the fluoro compound used brings oil and water repellency properties, even if it does not fully coat the surface. Indeed localized clusters of crystallized fluoro compound may be sufficient to provide oil and water repellency. See, Fluorine in Coat., 3rd Int. Conf. ; Juhue D., Aubert-Lafayette A.C., Corpart J.M., Girault S., De crevoisier G., Fabre P., Eds ; Paint Research Association, 1999 ; paper 10. Nevertheless, the indications as given of the amount of fluoro compound in the top layer must be regarded as averages.

The partly or wholly cured aminoplast resin in the toplayer of the laminate is preferably prepared from an aminoplast resin according to the present invention as disclosed above; more preferably from an MF or MUF resin.

The laminate according to the present invention has an improved oil-, water- and stain repellency compared to a laminate not comprising fluoro compounds. Moreover, it was found that the laminate according to the present invention has improved repellency, and durability of repellency compared to known PTFE-containing laminates. A suitable method for evaluating the said repellency is by means of measuring the contact angle between a representative liquid and the laminate. The guideline hereby is that an increase in contact angle is an indicator of an increase in repellency. Representative liquids can be either polar (such as water); or apolar (such as n-decane).

Next to repellency of model solutions, staining with everyday liquids like coffee, mustard, coca cola, ketchup, water based ink, olive oil, and red wine is a method to examine the repellency of laminates.

In order to prepare any melamine-containing embodiments according to the present invention, both melamine and the specific fluoro compound(s) should be incorporated in the aminoplast resin. In order to achieve this in a practical and economical fashion, the present invention also relates to a melamine composition, wherein the composition comprises between 0.01 and 25 wt.% of a polufluorinated (alk-) acrylic polymer. Preferably such a polymer is selected from the group consisting of perfluoroalkyl acrylic (co)polymers, perfluoroalkyl methacrylic (co)polymers, and combinations thereof. A melamine composition within the context of the present invention means a mixture comprising melamine in solid form, and comprising the specific fluoro compound in liquid, in dispersed, absorbed, or in solid form. This can lead to the melamine composition according to the present invention being a solid powder; the melamine composition according to the present invention can however also be present in a paste-like form. Preferably, the melamine in the melamine composition according to the present invention comprises a multicrystalline melamine. Multicrystalline melamine is known as such, from for example EP-A-1,073,646.

In a preferred embodiment of the melamine composition according to the present invention, the amount of fluoro compound contained relative to melamine in the melamine composition is much higher than the amount actually desired in the aminoplast resin and subsequently made products such as laminates. This allows the melamine composition according to the present invention to be used as a masterbatch. A masterbatch is herein defined as a preliminary mixture of melamine with one or more compounds which will later become part of an aminoplast resin in a subsequent mixing operation. Preferably, the masterbatch contains, relative to melamine, between 3 and 25 times as much fluoro compound as desired in the aminoplast resin.

The present invention will be illustrated by the following Examples and comparative experiments, without being limited thereto.

### Examples I - VI and comparative experiment A

### Resin preparation

Into a reactor, 452.6 grams of formalin (a 30 wt.% aqueous solution of formaldehyde), 133.3 grams of demineralised water, 27.4 grams of diethylene glycol, 13.7 grams of caprolactam, and 27.4 grams of sorbitol were loaded. The temperature was adjusted to 35 °C under agitation. The pH was adjusted to 9.3 through the addition of a 10% aqueous solution of NaOH. 345.6 grams of melamine (supplier: DSM) were then added to the reactor at a temperature of about 35 °C. After all melamine was added, the reactor content was heated to reflux at a heating rate of 1.5 °C/min. The reactor content, now a resin, was kept at reflux until the mixture became clear. After the mixture became clear, it was cooled down to 90 °C and kept there; first until the cloud point was reached, then until a water tolerance of 2 was reached. Cloud point is defined as the point in time at which 1 drop of resin added to a large amount of water at 20 °C no longer directly dissolves but shows turbidity. Water tolerance is defined as the amount of water (in gram) that can be added at 20 °C to 1 gram of resin before the resin turns turbid. After reaching a water tolerance of 2, the resin was cooled to 80 °C. As soon as the water tolerance was about 1.5, the resin was cooled down to room temperature and a pH value of 9.3. The resin had an F/M molar ratio of 1.65, a viscosity of 35 mPa.s, and a calculated solids content of 55 wt.%.

### Adding of fluoro compound and catalyst

To the resin, Zonyl^{®} 329 or Zonyl^{®} 8740 (supplier: DuPont) were added in various amounts between 0 and 1 wt.%. Both Zonyl^{®} products are aqueous emulsions containing 30 wt.% of the fluoro compound. Subsequently, paratoluenesulfonic acid (PTSA) was added as catalyst to the resin in such an amount that a turbidity time of 4-5 minutes was reached. Turbidity time is defined as the amount of time needed for 5 grams of resin - which is put into a test tube and stirred whereby the test tube is put in boiling water - to turn turbid. The amount of catalyst needed to reach the said turbidity time varied, from 50 mg in case the resin contained 1 wt.% of Zonyl^{®} 8740, to 252 mg in case the resin contained 1 wt.% of Zonyl^{®} 329, to 339 mg in case the resin contained no fluoro compound.

### Impregnation of a paper

A 80 gram/m² white décor paper was impregnated with the catalysed resin, such that 171 wt.% of the wet resin was present relative to the paper. After impregnation, the impregnated paper was dried to a 6% humidity.

### Preparation of laminates

The impregnated and dried paper was laminated onto a 10 mm MDF panel. Lamination was done at a temperature of 190 °C and a pressure of 2.5 MPa, during 50 seconds.

In order to evaluate the influence of the fluoro compound on the properties, in particular the surface properties of the laminate, the following Test Methods were used.

### Test Method 1. Contact Angle

Water and oil repellency were evaluated using water and selected organic solvents ("oils") from a DuPont Teflon^{®} Specification Test Kit. This technique evaluates the repellency of a material to liquids that are progressively more "wetting". The contact angle of the liquid is measured after 30 seconds (oil) or 10 seconds (water) using a goniometer at a controlled temperature of 23 °C. Results are provided in Table 2. Higher contact angles are indicative that a surface has greater repellency.

### Test Method 2. Dry Abrasion Test No. 1

The laminates were brushed with a nylon brush for 10 and 50 cycles. After brushing, contact angles were measured using decane and water to determine whether oil and water repellency withstood abrasion. Results are provided in Tables 3 and 4, in which each contact angle reported is the average of 7 individual measurements.

### Test Method 3. Wet Abrasion

A detergent solution (6 wt% solution of TEEPOL® detergent, available from Johnson Wax, in tap water) was prepared. A 1 ml drop of the detergent solution was placed on the laminates. The samples were then brushed with a nylon brush for 10 and 50 cycles. After brushing, contact angles were measured using decane and water to determine whether oil and water repellency withstood wet abrasion. Results are provided in Tables 3 and 4, in which each contact angle reported is the average of 7 individual measurements.

### Test Method 4. Taber^{®} Abrasion

The durability of the enhanced repellency of laminates according to the present invention was investigated by subjecting a laminate to a Taber Abrasion test according to EN 438. The weight as used was 2 times 500 grams; the abrasive paper used was a Type S-42 paper from Taber^{®} Industries. The repellency was determined via a visual judgement: initially and subsequent to 10, 20, 30 and 50 cycles. The S-42 paper is extremely abrasive, so that after 50 cycles the top layer of the laminate was essentially abraded away totally. It was necessary to rely on visual observation rather than on contact angle measurements; the droplet form of test fluids was destroyed by capillary forces caused by the cracks that were created by the S-42 paper. Results are provided in Table 5. A rating of 0 means complete spreading of the test solvent, while rating 10 equals a contact angle of approximately 100°.

### Results

The results of the evaluations are given in the Tables below. The various laminates are indicated by the type and amount of fluoro compound added to the resin.

**Table 1. List of Examples for Test Methods**

| Example / comparative experiment | Type of fluoro compound in the laminate | Amount of fluoro compound in the top layer of the laminate (wt.%) |
|---|---|---|
| A | n/a | 0 |
| I | Zonyl^{®} 329 | 0.1 |
| II | Zonyl^{®} 329 | 0.5 |
| III | Zonyl^{®} 329 | 1 |
| IV | Zonyl^{®} 8740 | 0.1 |
| V | Zonyl^{®} 8740 | 0.5 |
| VI | Zonyl^{®} 8740 | 1 |

**Table 2. Contact Angle Measurements with Water and Decane**

| Example / comparative experiment | Contact angle - water (°) | Contact angle - decane (°) |
|---|---|---|
| A | 53 | 6 |
| II | 78 | 45 |
| III | 92 | 47 |
| V | 97 | 46 |
| VI | 105 | 55 |

| | | |
|---|---|---|
| Note: decane is no°6 oil in Teflon® Test Kit. | | |

**Table 3. Dry and Wet Abrasion Effect on Contact Angle with Water**

| Example / comparative experiment | Contact Angle (°) | | | | |
|---|---|---|---|---|---|
| | No Abrasion | Dry Abrasion (x10) | Dry Abrasion (x50) | Wet Abrasion (x10) | Wet Abrasion (x50) |
| A | 53 | 47 | 31 | 55 | 54 |
| I | 64 | 46 | 35 | 62 | 62 |
| II | 77 | 67 | 81 | 68 | 76 |
| III | 92 | 84 | 80 | 81 | 80 |
| IV | 85 | 84 | 66 | 69 | 71 |
| V | 97 | 90 | 86 | 77 | 76 |
| VI | 105 | 89 | 94 | 88 | 85 |

**Table 4. Dry and Wet Abrasion Effect on Contact Angle with Decane**

| Example / comparative experiment | Contact Angle (°) | | | | |
|---|---|---|---|---|---|
| | No Abrasion | Dry Abrasion (x10) | Dry Abrasion (x50) | Wet Abrasion (x10) | Wet Abrasion (x50) |
| A | 6 | 10 | 9 | 11 | 11 |
| I | 29 | 36 | 32 | 31 | 35 |
| II | 45 | 46 | 41 | 45 | 42 |
| III | 47 | 55 | 47 | 49 | 49 |
| IV | 36 | 39 | 32 | 42 | 39 |
| V | 46 | 50 | 46 | 45 | 47 |
| VI | 55 | 52 | 51 | 50 | 49 |

**Table 5. Taber Abrasion effect on repellency**

| Example / comparative experiment | % wear of toplayer | Repellency against test fluids: | | |
|---|---|---|---|---|
| | | *i* | *ii* | *iii* |
| A | 0 | 5 | 1.5 | 0.5 |
| A | 10 | 5 | 1.5 | 0.5 |
| A | 20 | 5 | 1 | 0.5 |
| A | 30 | 3 | 1 | 0.5 |
| A | 50 | 2.5 | 1 | 0.5 |
| III | 0 | 8 | 5 | 5 |
| III | 10 | 6 | 5 | 5 |
| III | 20 | 6 | 5 | 5 |
| III | 30 | 6 | 3 | 3 |
| III | 50 | 4 | 3 | 2.5 |
| VI | 0 | 8 | 5 | 5 |
| VI | 10 | 6 | 5 | 5 |
| VI | 20 | 5 | 2 | 1.5 |
| VI | 30 | 5 | 2 | 1.5 |
| VI | 50 | 3 | 2 | 1.5 |

| | | | | |
|---|---|---|---|---|
| Legend to Table 5: - Test fluids: *i* = isopropanol /water mixture (in weight ratio 10/90) *ii* = hexa-decane *iii* = tetra-decane - Repellency indicator runs from 0 (no repellency at all; test fluid spreads completely) to 10 (excellent repellency; contact angle around 100°). | | | | |

### Comparative experiments B - C

To the resin, PTFE TE 3893 (supplier: DuPont) was added in an amount of respectively 0.25 and 2.5 wt.%, in the form of an aqueous emulsion containing 60 wt.% of the PTFE compound. Subsequently, paratoluenesulfonic acid (PTSA) was added as catalyst to the resin such that a turbidity time of 4-5 minutes was reached. The amount of catalyst needed to reach said turbidity time was essentially the same as in case the resin contained no fluoro compound. Subsequently, impregnated papers and laminates were prepared in the same way as mentioned before. The repellence was visually estimated in the way as was done in Table 5. Also surface tension of the laminates was measured. This was done with markers and test fluids from Arcotec GmbH, Germany. Results are compared with a laminate according to the present invention, and with the result of a laminate, not containing a fluoro compound, and given in Table 6.

**Table 6. Repellency and Surface tension**

| Example / Comparative experiment | Repellency against test fluids: | | | | Surface tension (mN/m) |
|---|---|---|---|---|---|
| | *i* | *ii* | *iii* | *iiii* | |
| II | 8 | 4.5 | 4 | 4 | <18 |
| B | 5 | 2 | 1 | 0.5 | 34 |
| C | 5 | 2.5 | 1 | 1 | 34 |
| A | 5 | 2 | 0 | 0 | 34 |

| | | | | | |
|---|---|---|---|---|---|
| Legend to Table 6: - Test fluids: *i* = isopropanol /water mixture (in weight ratio 2/98) *ii* = isopropanol /water mixture (in weight ratio 40/60) *iii* = hexa-decane *iiii* = decane - Repellency indicator runs from 0 (no repellency at all; test fluid spreads completely) to 10 (excellent repellency; contact angle around 100°) | | | | | |

In comparative experiment B, the amount of fluor in the laminate is the same as in case of Example II. Even at a ten times higher concentration of PTFE, no real improvement of repellency and surface tension is observed (vide comparative experiment C).

It is clear from the Tables that a laminate according to the present invention always has a higher contact angle than reference laminates without a fluoro compound. Furthermore, a laminate according to the present invention has a higher contact angle, compared to laminates containing PTFE. The effect is evident for both polar (water) and for apolar (decane) substances. Furthermore, when laminates were abraded, laminates according to the present invention, comprising the specific fluoro compound, were better able to withstand abrasion and maintain oil- and water-repellency than the reference laminates, as evidenced by the higher contact angles. Therefore, laminates according to the present invention have a very durable character in maintaining their repellency character

Moreover, testing of the properties of the laminates of Examples I - VI and comparative experiments A - C according to EN 438 showed that the laminates according to the present invention were at least as good as the reference laminate upon evaluation in the porosity test, Kiton test, 1-hour steam test and 20-hours / 80 °C crack test.

## Claims

1. Aminoplast resin, comprising a fluoro compound, wherein the resin comprises between 0.005 and 5 wt.% of a polyfluorinated (alk-)acrylic polymer.

2. Aminoplast resin according to claim 1, wherein the fluoro compound is selected from the group consisting of perfluoroalkyl acrylic (co)polymers, perfluoroalkyl methacrylic (co)polymers, and combinations thereof.

3. Aminoplast resin according to any one of claims 1-2, wherein the fluoro compound is a copolymer derived from perfluoroalkyl acrylic or perfluoroalkyl methacrylic monomers or combinations thereof, amino functional monomers, and silane functional monomers.

4. Laminate comprising a top layer and a bottom layer, whereby the top layer comprises an at least partly cured aminoplast resin and a fluoro compound, wherein the top layer comprises between 0.005 and 5 wt.% of a polyfluorinated (alk-)acrylic polymer.

5. Laminate according to claim 4, wherein the fluoro compound is selected from the group consisting of perfluoroalkyl acrylic (co)polymers, perfluoroalkyl methacrylic (co)polymers, and combinations thereof.

6. Laminate according to claim 4 or 5, wherein the top layer is formed from paper impregnated with an aminoplast resin according to any one of claims 1 to 3 and the bottom layer comprises an MDF panel.

7. Melamine composition, comprising melamine and a fluoro compound, wherein the composition comprises between 0.01 and 25 wt.% of a polyfluorinated (alk-)acrylic polymer.

8. Melamine composition according to claim 7, wherein the fluoro compound is selected from the group consisting of perfluoroalkyl acrylic copolymers, perfluoroalkyl methacrylic copolymers, and combinations thereof.

9. Melamine composition according to claim 8, wherein the melamine is a multicrystalline melamine.

10. A paper impregnated with an aminoplast resin according any one of claims 1 to 3.

11. Use of the aminoplast resin according to any one of claims 1 to 3 in decorative applications.

12. Use of the aminoplast resin according to any one of claims 1 to 3 in laminate flooring.

13. Use of the aminoplast resin according to any one of claims 1 to 3 to improve oil-, water-, and stain repellency of laminates.

14. Use of the aminoplast resin according to any one of claims 1 to 3 to improve durability of oil-, water-, and stain repellency of laminates.

15. Laminated wood based panel comprising the aminoplast resin according to any one of claims 1 to 3.

16. Process for the preparation of an aminoplast resin, comprising between 0.005 and 5 wt.% of a polyfluorinated (alk-)acrylic polymer comprising the step: adding the polyfluorinated (alk-)acrylic polymer to an aminoplast resin during the resin preparation.

17. Process for the preparation of an aminoplast resin, comprising between 0.005 and 5 wt.% of a polyfluorinated (alk-)acrylic polymer comprising the step: adding the polyfluorinated (alk-)acrylic polymer to an aminoplast resin.

## Patentansprüche

1. Aminoplastharz, umfassend eine Fluorverbindung, wobei das Harz zwischen 0,005 und 5 Gew.-% eines polyfluorierten (Alk)acrylpolymers umfaßt.

2. Aminoplastharz nach Anspruch 1, wobei die Fluorverbindung aus der Gruppe bestehend aus Perfluoralkylacryl(co)polymeren, Perfluoralkylmethacryl(co)-polymeren und Kombinationen davon ausgewählt ist.

3. Aminoplastharz nach einem der Ansprüche 1-2, wobei es sich bei der Fluorverbindung um ein von Perfluoracryl- oder Perfluoralkylmethacryl-Monomeren oder Kombinationen davon, aminofunktionellen Monomeren und silanfunktionellen Monomeren abgeleitetes Copolymer handelt.

4. Laminat mit einer Oberschicht und einer Unterschicht, wobei die Oberschicht mindestens ein teilweise gehärtetes Aminoplastharz und eine Fluorverbindung umfaßt, wobei die Oberschicht zwischen 0,005 und 5 Gew.-% eines polyfluorierten (Alk)acrylpolymers umfaßt.

5. Laminat nach Anspruch 4, wobei die Fluorverbindung aus der Gruppe bestehend aus Perfluoralkylacryl(co)polymeren, Perfluoralkylmethacryl-(co)polymeren und Kombinationen davon ausgewählt ist.

6. Laminat nach Anspruch 4 oder 5, wobei die Oberschicht aus Papier, das mit einem Aminoplastharz gemäß einem der Ansprüche 1 bis 3 imprägniert ist, gebildet ist und die Unterschicht eine MDF-Platte umfaßt.

7. Melaminzusammensetzung, umfassend Melamin und eine Fluorverbindung, wobei die Zusammensetzung zwischen 0,01 und 25 Gew.-% eines polyfluorierten (Alk)acrylpolymers umfaßt.

8. Melaminzusammensetzung nach Anspruch 7, wobei die Fluorverbindung aus der Gruppe bestehend aus Perfluoralkylacrylcopolymeren, Perfluoralkylmethacrylcopolymeren und Kombinationen davon ausgewählt ist.

9. Melaminzusammensetzung nach Anspruch 8, wobei es sich bei dem Melamin um multikristallines Melamin handelt.

10. Papier, das mit einem Aminoplastharz gemäß einem der Ansprüche 1 bis 3 imprägniert ist.

11. Verwendung des Aminoplastharzes gemäß einem der Ansprüche 1 bis 3 bei dekorativen Anwendungen.

12. Verwendung des Aminoplastharzes gemäß einem der Ansprüche 1 bis 3 in Laminatfußböden.

13. Verwendung des Aminoplastharzes gemäß einem der Ansprüche 1 bis 3 zur Verbesserung des Öl-, Wasser- und Fleckenabweisungsvermögens von Laminaten.

14. Verwendung des Aminoplastharzes gemäß einem der Ansprüche 1 bis 3 zur Verbesserung der Dauerhaftigkeit des Öl-, Wasser- und Fleckenabweisungsvermögens von Laminaten.

15. Platte auf Basis von laminiertem Holz, umfassend das Aminoplastharz gemäß einem der Ansprüche 1 bis 3.

16. Verfahren zur Herstellung eines Aminoplastharzes, das zwischen 0,005 und 5 Gew.-% eines polyfluorierten (Alk)acrylpolymers umfaßt, bei dem man:
ein Aminoplastharz bei der Harzherstellung mit dem polyfluorierten (Alk)acrylpolymer versetzt.

17. Verfahren zur Herstellung eines Aminoplastharzes, das zwischen 0,005 und 5 Gew.-% eines polyfluorierten (Alk)acrylpolymers umfaßt, bei dem man:
ein Aminoplastharz mit dem polyfluorierten (Alk)acrylpolymer versetzt.

## Revendications

1. Résine aminoplaste, comprenant un composé fluoro, **caractérisée en ce que** la résine comprend entre 0,005 et 5 % en poids d'un polymère (alk-)acrylique polyfluoré.

2. Résine aminoplaste selon la revendication 1, **caractérisée en ce que** le composé fluoro est choisi dans le groupe constitué de (co)polymères acryliques perfluoralkylés, de (co)polymères méthacryliques perfluoroalkylés, et des combinaisons de ceux-ci.

3. Résine aminoplaste selon l'une ou l'autre des revendications 1 et 2, **caractérisée en ce que** le composé fluoro est un copolymère issu de monomères acryliques perfluoroalkylés ou méthacryliques perfluoroalkylés ou des combinaisons de ceux-ci, de monomères amino fonctionnels, et de monomères silane fonctionnels.

4. Stratifié comprenant une couche supérieure et une couche inférieure, la couche supérieure comprenant une résine aminoplaste au moins partiellement durcie et un composé fluoro, la couche supérieure comprenant entre 0,005 et 5 % en poids d'un polymère (alk-)acrylique polyfluoré.

5. Stratifié selon la revendication 4, **caractérisé en ce que** le composé fluoro est choisi dans le groupe constitué de (co)polymères acryliques perfluoroalkylés, de (co)polymères méthacryliques perfluoroalkylés, et des combinaisons de ceux-ci.

6. Stratifié selon la revendication 4 ou 5, **caractérisé en ce que** la couche supérieure est formée de papier imbibé de résine aminoplaste selon l'une quelconque des revendications 1 à 3 et la couche inférieure comprend un panneau MDF.

7. Composition de mélamine, comprenant de la mélamine et un composé fluoro, **caractérisé en ce que** la composition comprend entre 0,01 et 25 % en poids d'un polymère (alk-)acrylique polyfluoré.

8. Composition de mélamine selon la revendication 7, **caractérisée en ce que** le composé fluoro est choisi dans le groupe constitué de copolymères acryliques perfluoroalkylés, de copolymères méthacryliques perfluoroalkylés, et des combinaisons de ceux-ci.

9. Composition de mélamine selon la revendication 8, **caractérisée en ce que** la mélamine est une mélamine multicristalline.

10. Papier imbibé de résine aminoplaste selon l'une quelconque des revendications 1 à 3.

11. Utilisation de la résine aminoplaste selon l'une quelconque des revendications 1 à 3, dans des applications décoratives.

12. Utilisation de la résine aminoplaste selon l'une quelconque des revendications 1 à 3, dans des revêtements de sol stratifiés.

13. Utilisation de la résine aminoplaste selon l'une quelconque des revendications 1 à 3, pour améliorer la capacité de répulsion d'huile, d'eau et de taches des stratifiés.

14. Utilisation de la résine aminoplaste selon l'une quelconque des revendications 1 à 3, pour améliorer la durabilité de la répulsion d'huile, d'eau et de taches des stratifiés.

15. Panneau à base de bois stratifié comprenant la résine aminoplaste selon l'une quelconque des revendications 1 à 3.

16. Procédé de préparation d'une résine aminoplaste, comprenant entre 0,005 et 5 % en poids d'un polymère (alk-)acrylique polyfluoré comprenant l'étape consistant à :
ajouter le polymère (alk-)acrylique polyfluoré à une résine aminoplaste pendant la préparation de la résine.

17. Procédé de préparation d'une résine aminoplaste, comprenant entre 0,005 et 5 % en poids d'un polymère (alk-)acrylique polyfluoré comprenant l'étape consistant à :
ajouter le polymère (alk-)acrylique polyfluoré à une résine aminoplaste.
